# EUROPÄISCHE PATENTANMELDUNG

(11) **EP 2 028 227 A1**
(43) Veröffentlichungstag der Anmeldung: **25.02.2009**
(21) Anmeldenummer: 08014582.4
(22) Anmeldetag: 16.08.2008
(51) Int. Cl.: C08K 5/52, C08L 23/10, C08K 5/3492

(54) **Flammwidrige Kunststoff-Formmassen**

(30) Priorität: 22.08.2007 DE 102007039560
(71) Anmelder: Clariant International Ltd., 4132 Muttenz (CH)
(72) Erfinder: Eisenträger, Frank, Dr., 08812 St Pere de Ribes (ES); Hörold, Sebastian, Dr., 86420 Diedorf (DE); Wanzke, Wolfgang, Dr., 86161 Augsburg (DE); Hill, Michael, Dr., 50827 Köln (DE)
(74) Vertreter: Paczkowski, Marcus

(57) **Zusammenfassung**

Die Erfindung betrifft eine flammwidrige Kunststoff-Formmasse enthaltend 65 bis 90 Gew.-%, bezogen auf die Gesamtmenge der Formmasse, eines Olefinpolymeren und 10 bis 35 Gew.-%, bezogen auf die Gesamtmenge der Formmasse, eines Flammschutzsystems, enthaltend 40 bis 80 Gew.-% Piperazinpolyphosphat, welches eine mittlere Kettenlänge von 2,2 bis 1000 Phosphateinheiten aufweist
(Komponente A),
20 bis 60 Gew.-% Melamincyanurat, Melaminborat oder kondensiertes Melamin
(Komponente B),
0 bis 2 Gew.-% Polytetrafluorethylen (Komponente C) und
0 bis 40 Gew.-% Ammoniumpolyphosphat (Komponente D).

## Beschreibung

Die Erfindung betrifft eine neue flammwidrige Kunststoff-Formmasse.

Polyolefine werden zunehmend in Anwendungen eingesetzt, wo Flammwidrigkeit erforderlich ist. Die Flammwidrigkeit wird heute üblicherweise durch den Zusatz von Brom- oder Phosphorverbindungen erreicht. Bromverbindungen setzen die Lichtstabilität der Olefine deutlich herab und können deshalb im Außenbereich nur sehr eingeschränkt verwendet werden. Zudem bewirkt der Zusatz bromhaltiger Flammschutzmittel eine erhöhte Rauchgasdichte und -toxizität.

Phosphorhaltige Flammschutzmittel benötigen eine recht hohe Dosierung und weisen häufig zu geringe thermische oder hydrolytische Beständigkeit auf, was ihre Einsetzbarkeit bisher eingeschränkt hat. Als phosphorhaltige Flammschutzmittel sind z. B. Piperazinphosphate, Melaminphosphate und Ammoniumphosphate sowie Kombinationen daraus beschrieben.

Die DE-A-0 126 454 beschreibt flammwidrige polymere Zusammensetzungen mit 20 bis 50 Teilen Piperazinpyrophosphat, 0 bis 3 % Titandioxid oder Siliziumdioxid und 0 bis 35 Teilen Ammoniumpolyphosphat, Melamin, Melaminphosphat oder Melaminpyrophosphat.

Die EP-A-0 650 171 beschreibt Isolierstoffe mit hohem elektrischem Widerstand, bestehend aus einem thermoplastischen Polymer mit 10 bis 45 % eines Phosphorsäure, Pyrophosphorsäure oder Polyphosphorsäure Salzes von Piperazin, Melamin, Pyrazin, Pyrimidine oder Hexahydropyrimidin.

Die EP-A-0 894 820 beschreibt eine Flammschutzmittelmischung aus 45 bis 65 % Piperazinpyrophosphat, 2,5 bis 4 % Piperazinphosphat, 5 bis 10 % Melaminphosphat und 15 bis 30 % Melamin. Die Mischung wird in einer einstufigen Synthese aus Phosphorpentoxid, Melamin und Piperazin hergestellt.

Die EP-A-1 277 794 beschreibt eine flammwidrige Harz-Zusammensetzung, bestehend aus einem synthetischen Harz, Piperazinpyrophosphat, Melaminpyrophosphat und einem Antidrippingmittel. Das Antidrippingmittel ist Polytetrafluorethylen (PTFE) oder Siliziumdioxid oder ein Metalloxid. Die Dosierung der Flammschutzmittelmischung beträgt 22 bis 24 % mit 0,1 % PTFE.

In der EP-A-0 583 065 wird eine flammwidrige Zusammensetzung aus einem Reaktionsprodukt aus Cyanursäure mit Diaminen und Ammoniumpolyphosphat beschrieben, die in Mengen von 1 bis 50 % einem thermoplastischen Harz zugesetzt wird.

Die beschriebenen Mischungen entwickeln zwar einen guten oder zumindest ausreichenden Flammschutzeffekt, weisen aber noch verschiedene Nachteile auf, die eine breite technische Anwendung in Polyolefinen bisher verhindern.

So sind die Verarbeitungstemperaturen der entsprechenden polymeren Massen durch Intumeszenz-Mischungen bisher auf 200 bis 250 °C begrenzt, der bevorzugte Bereich für die Spritzguss-Verarbeitung von Polypropylen liegt jedoch beispielsweise bei 250 bis 270 °C.

Die Wasserlöslichkeit von Intumeszenz-Mischungen oder einzelner Komponenten ist teilweise sehr hoch, so dass der Flammschutzeffekt der so ausgerüsteten polymeren Massen bei Kontakt mit Wasser relativ rasch vermindert oder ganz aufgehoben wird.

Ausserdem kann, insbesondere bei erhöhten Gebrauchstemperaturen, ein Teil der Flammschutzmischung aus der polymeren Masse "ausschwitzen", was die Gebrauchsfähigkeit der polymeren Masse einschränkt und auch den Flammschutzeffekt vermindert.

Nachteilig bei allen bisher bekannten Flammschutzsystemen ist zudem die hohe notwendige Dosierung.

Ziel der vorliegenden Erfindung war es deshalb, eine Flammschutzmittelkombination für thermoplastische Polymere, insbesondere Polyolefine, bereitzustellen, die sich durch geringe Dosierung, gute thermische Beständigkeit, geringe Wasserlöslichkeit und geringe Hydrolyseneigung auszeichnet. Überraschend wurde gefunden, dass Piperazinpyrophosphat und Piperazinpolyphosphate mit Kettenlängen 2,2-1000 in Kombination mit Stickstoff Flammschutzmitteln wie Melamincyanurat oder kondensiertem Melamin (Melem) und/oder Ammoniumpolyphosphaten wirksame Flammschutzmittelsysteme darstellen, die eine hervorragende thermische und hydrolytische Stabilität aufweisen. Die Flammschutzmittelkombination kann zudem Antidrippingmittel wie PTFE enthalten.

Die damit ausgerüstete flammwidrige Kunststoff-Formmasse weist eine hohe Lichtstabilität, gute Temperatur- und Alterungsbeständigkeit sowie im Brandfall eine nur geringe Rauchgasdichte und -toxizität auf.

Die Erfindung betrifft daher eine flammwidrige Kunststoff-Formmasse enthaltend 65 bis 90 Gew.-%, bezogen auf die Gesamtmenge der Formmasse, eines Olefinpolymeren und 10 bis 35 Gew.-%, bezogen auf die Gesamtmenge der Formmasse, eines Flammschutzsystems, enthaltend 40 bis 80 Gew.-% Piperazinpolyphosphat, welches eine mittlere Kettenlänge von 2,2 bis 1000 Phosphateinheiten aufweist (Komponente A),
20 bis 60 Gew.-% Melamincyanurat, Melaminborat oder kondensiertes Melamin (Komponente B),
0 bis 2 Gew.-% Polytetrafluoroethylen (Komponente C) und
0 bis 40 Gew.-% Ammoniumpolyphosphat (Komponente D).

Bevorzugt enthält das Flammschutzsystem 60 bis 80 Gew.-%
Piperazinpolyphosphat, welches eine mittlere Kettenlänge von 2,2 bis 1000 Phosphateinheiten aufweist (Komponente A),
20 bis 39,9 Gew.-% Melamincyanurat, Melaminborat oder kondensiertes Melamin (Komponente B),
0,1 bis 2 Gew.-% Polytetrafluoroethylen (Komponente C) und
0 bis 10 Gew.-% Ammoniumpolyphosphat (Komponente D).

Besonders bevorzugt enthält das Flammschutzsystem 40 bis 50 Gew.-% Piperazinpolyphosphat, welches eine mittlere Kettenlänge von 2,2 bis 1000 Phosphateinheiten aufweist (Komponente A),
20 bis 39,9 Gew.-% Melamincyanurat, Melaminborat oder kondensiertes Melamin (Komponente B),
0,1 bis 2 Gew.-% Polytetrafluoroethylen (Komponente C) und
20 bis 40 Gew.-% Ammoniumpolyphosphat (Komponente D).
Bevorzugt handelt es sich bei dem Olefinpolymeren um Polyethylen, Polypropylen oder beliebige Mischungen bzw. Polymerisate davon.

Bevorzugt weist das Piperazinpolyphosphat, folgende Kettenlängenverteilung auf:

| | |
|---|---|
| Kettenlänge 1 | 0 bis 10 % |
| Kettenlänge 2 | 0 bis 30 % |
| Kettenlänge 3 | 0 bis 30 % |
| Kettenlänge 4 | 0 bis 90 % |
| Kettenlänge 5 | 0 bis 25 % |
| Kettenlänge 6 | 0 bis 25 % |
| Kettenlänge 7 | 0 bis 40 % |
| Kettenlänge 8 und darüber | 0 bis 40 %. |

Bevorzugt handelt es sich bei dem Antidrippingmittel um fluorierte Polymere, insbesondere Polytetrafluorethylen (PTFE) und/oder Alkali- oder Erdalkalimetallsalze der Perfluoralkansulfonsäure.

Bevorzugt ist das Ammoniumpolyphosphat (Komponente D) mit 0,5 bis 25 % seines Gewichtes mit einem Coatingmittel umhüllt.

Bevorzugt handelt es sich bei dem Coatingmittel um ein gehärtetes Melamin/Formaldehyd-Harz oder ein gehärtetes Epoxidharz.

Bevorzugt weist das Piperazinpolyphosphat, eine mittlere Teilchengröße (d50) von < 100 µm auf.

Besonders bevorzugt weist das Piperazinpolyphosphat, eine mittlere Teilchengröße (d50) von < 30 µm auf.

Besonders bevorzugt weist das eingesetzte Piperazinpolyphosphat folgende Kettenlängenverteilung auf:

| | |
|---|---|
| Kettenlänge 1 | 0 bis 5 % |
| Kettenlänge 2 | 0 bis 20% |
| Kettenlänge 3 | 0 bis 20 % |
| Kettenlänge 4 | 40 bis 90 % |
| Kettenlänge 5 | 0 bis 15 % |
| Kettenlänge 6 | 0 bis 15 % |
| Kettenlänge 7 | 0 bis 30 % |
| Kettenlänge 8 und darüber | 0 bis 30 %. |

Bevorzugt weist eine 10 %ige Suspension des eingesetzten Piperazinpolyphosphats in Wasser einen pH-Wert zwischen 1,5 und 7 auf.

Besonders bevorzugt weist eine 10 %ige Suspension des eingesetzten Piperazinpolyphosphats in Wasser einen pH-Wert zwischen 2,0 und 5,5 auf.

Die Säurezahl des Filtrats einer 10%igen Suspension des eingesetzten Piperazinpolyphosphats liegt zwischen 50 mg KOH /g und 600 mg KOH/g.

Die Säurezahl des Filtrats einer 10%igen Suspension des eingesetzten Piperazinpolyphosphats liegt zwischen 200 und 400 mg KOH/g.

Bevorzugt weist das eingesetzte Piperazinpolyphosphat eine Wasserlöslichkeit von maximal 7 % auf.

Das Piperazinpolyphosphat ist dadurch gekennzeichnet, dass die Temperatur bei 5 % Gewichtsverlust - als Maß für die Thermostabilität - zwischen 290 °C und 400 °C, bevorzugt zwischen 300 °C und 380 °C und besonders bevorzugt zwischen 320 °C und 370 °C liegt.

Ferner ist das Piperazinpolyphosphat ist dadurch gekennzeichnet, dass die Teilchengröße eine mittleren Teilchendurchmesser (d50) von kleiner 100 µm, bevorzugt kleiner 50 µm und besonders bevorzugt < 30 µm hat.

Ferner ist das Piperazinpolyphosphat ist dadurch gekennzeichnet, dass die Restfeuchte kleiner 1 % des Materials, bevorzugt kleiner 0,5 % und besonders bevorzugt kleiner 0,1 % des Materials liegt.

Die erfindungsgemässe flammwidrige polymere Formmasse enthält 65 bis 90, vorzugsweise 75 bis 80 Gew.-% eines der nachstehend aufgeführten Polymere:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen.
4. Polystyrol, Poly(p-methylstyrol).
5. Copolymere von Styrol oder alpha -Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Blockcopolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als so genannte ABS-, MBS-, ASA- oder AES-Polymere bekannt sind.

Bevorzugt als Polymere sind Polyolefine, insbesondere Polypropylen, Polyethylen und Ethylen-Vinylacetat-Copolymere.

Komponente A des Flammschutzsystems ist ein Umsetzungsprodukt aus Piperazin und Polyphosphorsäure nach Reaktionsgleichung 1:

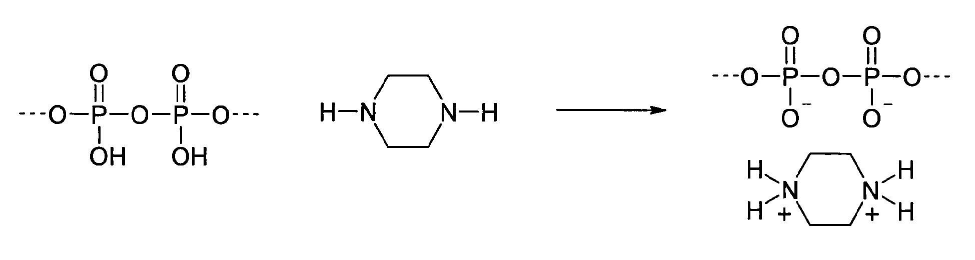

Die bevorzugte Kettenlänge ist > 2,2.

Komponente C ist ein Antidrippingmittel. Komponente C umfasst fluorierte Polymere, wie Polytetrafluorethylen, Polyvinylidenfluorid und Polyhexafluorpropylen; Alkali- oder Erdalkalimetallsalze der Perfluoralkansulfonsäure wie Natriumperfluormethansulfonat, Kaliumperfluor-n-butansulfonat, Kaliumperfluor-t-butansulfonat, Natriumperfluoroctansulfonat und Calciumperfluor-2-ethylhexylsulfonat. Diese können für sich allein oder in Kombinationen eingesetzt werden.

Besonders bevorzugt ist Polytetrafluorethylen (PTFE).

Das erfindungsgemäße Flammschutzsystems kann als Komponente D ein Ammoniumpolyphosphat der Formel (NH₄PO₃)n enthalten, worin n eine Zahl von 200 bis 1000, vorzugsweise etwa 700 ist, welches ein frei fliessendes, in Wasser schwer lösliches Pulver darstellt und das mit 0,5 bis 25 Gew.-% eines Coatingmittels, vorzugsweise mit einem gehärteten Melamin/Formaldehyd-Harz oder einem gehärteten Epoxidharz, umhüllt sein kann.

Die Partikelgröße der verwendeten Flammschutzmittel, Komponente A, B und D ist vorzugsweise < 40 µm und besonders bevorzugt zwischen 15 und 25 µm.

Neben dem Flammschutzsystem kann die erfindungsgemässe Kunststoff-Formmasse zusätzlich die folgenden Additive enthalten:
1. Antioxidantien, beispielsweise alkylierte Monophenole, alkylierte Hydrochinone, hydroxlierte Thiodiphenylether, Alkyliden-Bisphenole, Benzylverbindungen, Acylaminophenole, Ester der beta-(3,5-Di-t-butyl-4-hydroxyphenyl)-propionsäure mit ein- oder mehrwertigen Alkoholen, wie beispielsweise mit Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol, Di-hydroxyethyl-oxalsäurediamid, Ester der beta-(5-t-Butyl-4-hydroxy-3-methylphenyl)-propionsäure mit ein- oder mehrwertigen Alkoholen, wie beispielsweise mit Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol, Di-hydroxyethyl-oxalsäurediamid, Amide der beta-(3,5-Di-t-butyl-4-hydroxyphenyl)-propionsäure.
2. UV-Absorber und Lichtschutzmittel
2.1 2-(2'-Hydroxyphenyl)-benztriazole, wie beispielsweise das 5'-Methyl-, 3',5'-Di-t-butyl-, 5'-t-Butyl-, 5'-(1,1,3,3-Tetramethylbutyl)-, 5-Chlor-3',5'-di-t-butyl, 5-Chlor-3'-t-butyl-5'-methyl-, 3'-sec.-Butyl-5'-t-butyl-, 4'-Octoxy-, 3',5'-Di-t-amyl-, 3',5'-Bis(alpha , alpha -dimethylbenzyl)-Derivat.
2.2 2-Hydroxybenzophenone, beispielsweise das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3 Ester von gegebenenfalls substituierten Benzoesäuren, beispielsweise 4-t-Butyl-phenylsalicylat, Phenylsalicylat, Octylphenylsalicylat, Dibenzoylresorcin, Bis-(4-t-butylbenzoyl)resorcin, Benzoylresorcin, 3,5-Di-t-butyl-4-hydroxybenzoesäure-2,4-di-t-butylphenylester, 3,5-Di-t-butyl-4-hydroxybenzoesäure-hexadecylester.
2.4 Acrylate, beispielsweise alpha-Cyan-beta, beta-diphenylacrylsäure-ethylester bzw. -iso-octylester, alpha-Carbomethoxyzimtsäuremethylester, alpha-Cyano-betamethyl-p-methoxyzimtsäure-methylester bzw. -butylester, alpha-Carbomethoxy-p-methoxyzimtsäure-methylester, N-(beta-Carbomethoxy-9-cyano-vinyl)-2-methylindolin.
2.5 Nickelverbindungen, beispielsweise Nickelkomplexe des 2,2'-Thio-bis-[4-(1,1,3,3-tetramethyl-butyl)-phenols], wie der 1:1- oder 1:2-Komplex, gegebenenfalls mit zusätzlichen Liganden wie n-Butylamin, Triethanolamin oder N-Cyclohexyldiethanolamin, Nickelalkyl-dithiocarbamate, Nickelsalze von 4-Hydroxy-3,5-di-t-butylbenzylphosphonsäure-mono-alkylestern wie vom Methyl- oder Ethylester, Nickelkomplexe von Ketoximen wie vom 2-Hydroxy-4-methyl-phenylundecylketoxim, Nickelkomplexe des 1-Phenyl-4-lauroyl-5-hydroxy-pyrazols, gegebenenfalls mit zusätzlichen Liganden, Nickelsalze der 2-Hydroxy-4-alkoxybenzophenone.
2.6 Sterisch gehinderte Amine, beispielsweise 2.6.1 Bis(2,2,6,6-tetramethylpiperidyl)-sebacat, Bis-(1,2,2,6,6-pentamethylpiperidyl)-sebacat, Bis-(2,2,6,6-tetramethyl-piperidyl)-glutarat, Bis-(1,2,2,6,6-pentamethylpiperidyl)-glutarat, Bis-(2,2,6,6-tetramethylpiperidyl)-succinat, Bis-(1,2,2,6,6-pentamethylpiperidyl)-succinat, 4-Stearyloxy-2,2,6,6-tetramethylpiperidin, 4-Stearyloxy-1,2,2,6,6-pentamethylpiperidin, 4-Stearoyloxy-2,2,6,6-tetramethylpiperidin, 4-Stearoyloxy-1,2,2,6,6-pentamethylpiperidin, 2,2,6,6-Tetramethylpiperidylbehenat, 1,2,2,6,6-Pentamethylpiperidylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diazadispiro-[5.1.11.2]-heneicosan-21-on, 2,2,4,4-Tetramethyl-3-acetyl-7-oxa-3,20-d iaza-dispiro-[5.1.11.2]-heneicosan-21-on,2,2,4,4-Tetramethyl-7-oxa-3,20-diaza-20-(beta-lauryloxy-carbonylethyl)-21-oxodispiro-[5.1.11.2]-heneicosan, 2,2,3,4,4-Pentamethyl-7-oxa-3,20-diaza-20-(betalauryloxy-carbonylethyl)-21-oxo-dispiro-[5.1.11.2]-heneicosan, 2,2,4,4-Tetramethyl-3-acetyl-7-oxa-3,20-diaza-20-(beta-lauryloxy-carbonyl-ethyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)biphenyl, N,N',N",N"'-Tetrakis-[2,4-bis-[N-(2,2,6,6-tetramethyl-4-piperidyl)-butylamino]-1,3,5-triazin-6-yl]-4,7-diazadecan-1,10-diamin,N,N' ,N",N"'-Tetrakis[2,4-bis-[N-(1,2,2,6,6-pentamethyl-4-piperidyl)-butylamino]-1,3,5-triazin-6-yl]-4,7-diazadecan-1,10-diamin, N,N',N",N"'-Tetrakis-[2,4-bis-[N-(2,2,6,6- tetramethyl-4-piperidyl)-methoxypropylamino]-1,3,5-triazin-6-yl]-4,7-diazadecan-1,10-diamin, N,N',N",N"'-Tetrakis-[2,4-bis-[N-(1,2,2,6,6-pentamethyl-4-piperidyl)-methoxypropylamino]-1,3,5-triazin-6-yl]-4,7-diazadecan-1,10-diamin, Bis-(1,2,2,6,6-pentamethyl-piperidyl)-n-butyl-3,5-di-t-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).
2.7 2-Poly-N,N'-bis(2,2,6,6-tetramethyl-4-piperidyl)-1,8-diazadecylen, Kondensationsprodukt aus 1-(2-Hydroxyethyl)-2,2,6,6-tetramethyl-4-hydroxypiperidin und Bernsteinsäure, Kondensationsprodukt aus N,N'-Bis-(2,2,6,6-tetramethyl-4-piperidyl)-hexamethylendiamin und 4-t-Octylamino-2,6-dichlor-1,3,5-triazin, Kondensationsprodukt aus N,N'-Bis-(2,2,6,6-tetramethyl-4-piperidyl)-hexamethylendiamin und 4-Morpholino-2,6-dichlor-1,3,5-triazin.
2.8 Oxalsäurediamide, beispielsweise 4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyloxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von o- und p-Methoxy- sowie von o- und p-Ethoxy-di-substituierten Oxaniliden.
3. Metalldesaktivatoren, beispielsweise N,N'-Diphenyloxalsäurediamid, N-Salicylyl-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloylamino-1,2,3-triazol, Bis-benzylidenoxalsäuredihydrazid.
4. Phosphite und Phosphonite, beispielsweise Triphenylphosphit, Diphenylalkylphosphite, Phenyldialkylphosphite, Trisnonylphenylphosphit, Trilaurylphosphit, Trioctadecylphosphit, Distearylpentaerythrityl-diphosphit, Tris-(2,4-di-t-butylphenyl)-phosphit, Diisodecyl-pentaerythrityl-diphosphit, Bis-(2,4-di-t-butylphenyl)-pentaerythrityl-diphosphit, Tristearyl-sorbityltriphosphit, Tetrakis-(2,4-di-t-butylphenyl)-4,4'-biphenylen-diphosphonit, 3,9-Bis-(2,4-di-t-butylphenoxy)-2,4,8,10-tetraoxa-3,9-diphosphaspiro-[5.5]-undecan, Tris-(2-t-butyl-4-thio-(2'-methenyl-4'-hydroxy-5'-t-butyl)-phenyl-5-methenyl)-phenylphosphit.
5. Peroxidzerstörende Verbindungen, beispielsweise Ester der beta-Thiodipropionsäure, wie beispielsweise der Lauryl-, Stearyl-, Myristyl- oder Tridecylester, Mercaptobenzimidazol, das Zinksalz des 2-Mercapto-benzimidazols, Zink-alkyldithiocarbamate, Dioctadecylsulfid, Dioctadecyldisulfid, Pentaerythrit-tetrakis(beta-dodecylmercapto)-propionat.
6. Basische Co-Stabilisatoren, beispielsweise Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.
7. Nukleierungsmittel, beispielsweise 4-t-Butylbenzoesäure, Adipinsäure, Diphenylessigsäure, Dibenzylidensorbitol.
8. Füllstoffe und Verstärkungsmittel, beispielsweise Calciumcarbonat, Silikate, Glasfasern, Asbest, Talk, Kaolin, Glimmer, Bariumsulfat, Metalloxide und -hydroxide, Russ, Graphit.
9. Sonstige Zusätze, beispielsweise Weichmacher, Gleitmittel, Emulgatoren, Pigmente, optische Aufheller, Antistatika, Treibmittel.

Die verschiedenen zusätzlichen Additive der vorgenannten Gruppen 1 bis 7 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 8 und 9 betragt 1 bis 80, vorzugsweise 10 bis 50 Gew.-%, bezogen auf die gesamte Formmasse.

Die Additive werden nach allgemein üblichen Methoden in die organischen Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunsten des Lösemittels kann die Einarbeitung erfolgen. Die Verbindungen sind auch wirksam, wenn sie in ein bereits granuliertes Polymer nachträglich in einem gesonderten Verarbeitungsschritt eingebracht werden.

Die erfindungsgemäss zu verwendenden Verbindungen können auch in Form eines Masterbatches, der diese Verbindungen beispielsweise in einer Konzentration von 30 bis 90, vorzugsweise 50 bis 80 Gew.-% enthält, den flammwidrig auszurüstenden Polymeren zugesetzt werden.

Die erfindungsgemässe Kunststoff-Formmasse kann in verschiedener Form angewendet werden, beispielsweise als flammwidrig ausgerüstete Folien, Fasern, Bändchen oder Profile.

Durch das erfindungsgemäss einzusetzende Flammschutzsystem wird sowohl die Verarbeitungstemperatur der Kunststoff-Formmasse erhöht, als auch die Wasserlöslichkeit von Teilen der Formmasse nach der Verarbeitung deutlich gesenkt. Ausserdem zeigen die flammwidrig ausgerüsteten Kunststoffteile eine verringerte Neigung zum "Ausschwitzen" von Bestandteilen des Flammschutzsystems.

### Verwendete Komponenten:

| | |
|---|---|
| Polypropylen | Moplen^{®} HP 500N, Basell Polyolefines |
| Piperazinpolyphosphat | hergestellt aus Piperazin und Polyphosphorsäure, Kettenlänge > 2,2 |
| Melamincyanurat | Melapur^{®} MC 15, Ciba SC, Lampertheim |
| Guanidinphosphat | Degussa, Trostberg |
| Benzoguanamin | Degussa, Trostberg |
| Melem | Delacal^{®} M 350, Delamin Ltd., UK |
| PTFE | Dyneon^{®} TF 2025, Dyneon, Kelsterbach |
| Phosphit Stabilisator | Sandostab^{®} PEP-Q, Clariant, Basel, CH |

Herstellung, Verarbeitung und Prüfung von flammwidrigen Kunststoff-Formmassen: Die Herstellung der Formmassen erfolgte auf einem gleichlaufenden Doppelschneckenextruder (Typ Leistritz ZSE 27 HP 44 D) bei einer Temperatur von 180 °C, einer Schneckendrehzahl von 250 Umdrehungen pro Minute und einem Durchsatz von 20 kg pro Stunde. Unter diesen Bedingungen resultierte eine Massetemperatur an der Düse von ca. 200 °C. Das Polymer (PP als Granulat) wurde über den Haupteinzug zugegeben, die pulverförmigen Komponenten A, B, C und D wurden über eine Seitendosiereinheit zugegeben. Die Komponenten wurden in dem in den Tabellen angegebenen Verhältnis verarbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei einer Temperatureinstellung des Zylinders von 180 °C am Einzug bis 200 °C an der Düse und einer Formtemperatur von 20°C zu Prüfkörpern verarbeitet und anhand des UL 94-Vertikaltests auf Flammwidrigkeit geprüft und klassifiziert. Für die Prüfung nach UL 94 wurden Prüfkörper der Abmessungen 127 mm x 12,7 mm x 1,6 mm hergestellt.

Die Bestimmung der Flammwidrigkeit wurde anhand des UL 94-Vertikaltests (Underwriter Laboratories Inc., Standard for Safety, Test for Flammability of Plastic Materials for Parts in Devices and Appliances, ISBN 0-7629-0082-2) durchgeführt. Diese Prüfung wird in großem Maße auf dem Gebiet der Elektrotechnik und Elektronikanwendungen zur Abschätzung des Brandverhaltens eingesetzt und erlaubt eine Einstufung der geprüften Materialien bei Einwirkung einer externen Zündquelle in Form einer offenen Flamme. Bewertet werden die Nachbrennzeiten, das Nachglühverhalten und das Abtropfverhalten der Prüfkörper. Für die Einstufung eines flammwidrigen Kunststoffs in die Klasse V-0 müssen die folgenden Kriterien erfüllt sein: bei einem Satz von fünf Prüfkörpern dürfen alle Proben nach zweimaliger Beflammung von 10 Sekunden Dauer mit einer offenen Flamme mit definierter Höhe nicht länger als 10 Sekunden nachbrennen. Die Summe der Nachbrennzeiten bei 10 Beflammungen von fünf Prüfkörpern darf nicht größer als 50 Sekunden sein. Zudem darf kein brennendes Abtropfen oder vollständiges Abbrennen erfolgen und die Summe aus Nachbrenn- und Nachglühzeit des jeweiligen Prüfkörpers darf 30 Sekunden nicht überschreiten. Zur Einstufung in die Klasse V-1 wird verlangt, dass die Einzelnachbrennzeiten nicht länger als 30 Sekunden betragen und dass die Summe der Nachbrennzeiten von 10 Beflammungen von fünf Proben nicht größer als 250 Sekunden ist. Zudem darf kein brennendes Abtropfen oder vollständiges Abbrennen erfolgen und die Summe aus Nachbrenn- und Nachglühzeit des jeweiligen Prüfkörpers darf 60 Sekunden nicht überschreiten. Eine Einstufung in die Klasse V-2 erfolgt dann, wenn es bei Erfüllung der übrigen Kriterien, wie sie für die Einstufung in die Klasse V-1 gelten, zu einem brennenden Abtropfen kommt. Werden die oben genannten Kriterien nicht erfüllt, erfolgt die Bewertung n.k. = nicht klassifizierbar als V-0, V-1 oder V-2. Die Einstufung in die Klasse V-0 entspricht einer hohen Flammwidrigkeit und wird von einer Reihe von Anwendungen im Elektrobereich als Anforderung gestellt.

In den nachfolgenden Beispielen ist die Nachbrennzeit in Sekunden angegeben.

Die Tabelle 1 zeigt als Vergleichsbeispiele die alleinige Verwendung von Piperazinpolyphosphat, Melamincyanurat und Ammoniumpolyphosphat in Polypropylen. Mit keinem der Produkte für sich allein eingesetzt wird eine Klassifizierung nach UL 94 erreicht.

**Tabelle 1: Vergleichsbeispiele Flammschutzmittel allein (Angaben in Gew.-%)**

| Beispiel | Vgl. 1 | Vgl. 2 | Vgl. 3 |
|---|---|---|---|
| Polypropylen | 73,6 | 73,6 | 73,6 |
| Piperazinpolyphosphat | 26 | | |
| Melamincyanurat | | 26 | |
| Ammoniumpolyphosphat | | | 26 |
| PTFE | 0,2 | 0,2 | 0,2 |
| Phosphit Stabilisator | 0,2 | 0,2 | 0,2 |
| UL-94 (1,6 mm) | n.k. | n.k. | n.k. |
| Nachbrennzeit (Sek.) | > 170 | > 300 | > 200 |

Die Tabelle 2 zeigt erfindungsgemäße Kombinationen aus Piperazinpolyphosphat und Melamincyanurat mit PTFE. Überraschend wurde eine gute Synergie zwischen Piperazinpolyphosphat und Melamincyanurat gefunden.

**Tabelle 2: Erfindungsgemäße Kombination aus Piperazinpolyphosphat und Melamincyanurat mit PTFE (Angaben in Gew.-%)**

| Beispiel | 1 | 2 | 3 | 4 | 5 | 6 |
|---|---|---|---|---|---|---|
| Polypropylen | 73,6 | 73,6 | 73,6 | 73,6 | 73,6 | 73,6 |
| Piperazinpolyphosphat | 20,8 | 19,5 | 18,5 | 17 | 16 | 15 |
| Melamincyanurat | 5,2 | 6,5 | 7,5 | 9 | 10 | 11 |
| PTFE | 0,2 | 0,2 | 0,2 | 0,2 | 0,2 | 0,2 |
| Phosphit Stabilisator | 0,2 | 0,2 | 0,2 | 0,2 | 0,2 | 0,2 |
| UL-94 (1,6 mm) | V-0 | V-0 | V-0 | V-0 | V-0 | V-0 |
| Nachbrennzeit (Sek.) | 3 | 12 | 15 | 5 | 30 | 29 |

Tabelle 3 zeigt, dass mit einer Dreierkombination aus Piperazinpyrophosphat, Melamincyanurat und Ammoniumpolyphosphat bereits in geringer Dosierung V-0 erreicht wird. Die Kombinationen von Ammoniumpolyphosphat mit Piperazinpyrophosphat oder Melamincyanurat zeigen dagegen keine ausreichende Flammwidrigkeit.

**Tabelle 3: Vergleichsbeispiele Kombination von Ammoniumpolyphosphat mit Melamincyanurat bzw. mit Piperazinpolyphosphat und erfindungsgemäße Kombination aus Piperazinpolyphosphat, Melamincyanurat und Ammoniumpolyphosphat mit PTFE (Angaben in Gew.-%)**

| Beispiel | Vgl. 4 | Vgl. 5 | Vgl. 6 | 7 |
|---|---|---|---|---|
| Polypropylen | 73,5 | 73,5 | 73,5 | 73,5 |
| Piperazinpolyphosphat | | 17 | 13 | 8,5 |
| Ammoniumpolyphosphat | 19,5 | 9 | 13 | 8,5 |
| Melamincyanurat | 6,5 | | | 9 |
| PTFE | 0,3 | 0,3 | 0,3 | 0,3 |
| Phosphit Stabilisator | 0,2 | 0,2 | 0,2 | 0,2 |
| UL-94 (1,6 mm) | n.k. | n.k. | V-2 | V-0 |
| Nachbrennzeit (Sek.) | > 108 | > 118 | 51 | 1 |

Die Tabelle 4 zeigt erfindungsgemäße Kombinationen aus Piperazinpolyphosphat und Melem mit PTFE. Mit Melem allein wird kein V-0 erreicht.

**Tabelle 4: Erfindungsgemäße Kombination aus Piperazinpolyphosphat und Melem mit PTFE (Angaben in Gew.-%)**

| Beispiel | 8 | 9 | 10 |
|---|---|---|---|
| Polypropylen | 73,6 | 73,6 | 73,6 |
| Piperazinpolyphosphat | 13 | 16 | 18,5 |
| Melem | 13 | 10 | 7,5 |
| PTFE | 0,2 | 0,2 | 0,2 |
| Phosphit Stabilisator | 0,2 | 0,2 | 0,2 |
| UL-94 (1,6 mm) | V-1 | V-1 | V-0 |
| Nachbrennzeit (Sek.) | 112 | 56 | 39 |

Die Tabelle 5 zeigt einen Vergleich der erfindungsgemäßen Kombination von Piperazinpyrophosphat mit Melamincyanurat und der Kombination von Piperazin- und Melaminpyrophosphat nach EP-A-1 277 794. Im Ofentest 150 °C (12 Tage) ist die erfindungsgemäße Kombination überraschend stabiler.

Die Wasserlagerung der gewogenen Prüfkörper erfolgte in einem auf 23 °C temperiertem, gerührtem Bad. Nach 30 Tagen wurden die Prüfkörper zunächst 48 Stunden bei 80 °C getrocknet und anschliessend erneut gewogen. Auch hier zeigt die Kombination aus Piperazinpyrophosphat und Melamincyanurat einen überraschend geringeren Gewichtsverlust.

**Tabelle 5 (Angaben in Gew.-%):**

| Beispiel | 11 | 12 (Vergleich) |
|---|---|---|
| Polypropylen | 79,6 | 73,6 |
| Piperazinpolyphosphat | 10 | 10 |
| Melamincyanurat | 10 | |
| Melaminpyrophosphat | | 10 |
| PTFE | 0,2 | 0,2 |
| Phosphit Stabilisator | 0,2 | 0,2 |
| UL-94 (1,6 mm) | V-0 | V-1 |
| Nachbrennzeit (Sek.) | 34 | 52 |
| Ofentest 150 °C (12 Tage) | weiß | bräunlich |
| Gewichtsverlust nach Wasserlagerung 30 Tage | 0,1% | 0,5% |

## Patentansprüche

1. Flammwidrige Kunststoff-Formmasse enthaltend 65 bis 90 Gew.-%, bezogen auf die Gesamtmenge der Formmasse, eines Olefinpolymeren und 10 bis
35 Gew.-%, bezogen auf die Gesamtmenge der Formmasse, eines Flammschutzsystems, enthaltend
40 bis 80 Gew.-% Piperazinpolyphosphat, welches eine mittlere Kettenlänge von 2,2 bis 1000 Phosphateinheiten aufweist (Komponente A),
20 bis 60 Gew.-% Melamincyanurat, Melaminborat oder kondensiertes Melamin (Komponente B),
0 bis 2 Gew.-% Polytetrafluorethylen (Komponente C) und
0 bis 40 Gew.-% Ammoniumpolyphosphat (Komponente D).

2. Formmasse nach Anspruch 1, **dadurch gekennzeichnet, dass** das Flammschutzsystem
60 bis 80 Gew.-% Piperazinpolyphosphat, welches eine mittlere Kettenlänge von 2,2 bis 1000 Phosphateinheiten aufweist (Komponente A),
20 bis 39,9 Gew.-% Melamincyanurat, Melaminborat oder kondensiertes Melamin (Komponente B),
0,1 bis 2 Gew.-% Polytetrafluorethylen (Komponente C) und
0 bis 10 Gew.-% Ammoniumpolyphosphat (Komponente D) enthält.

3. Formmasse nach Anspruch 1 oder 2, **dadurch gekennzeichnet, dass** das Flammschutzsystem
40 bis 50 Gew.-% Piperazinpolyphosphat, welches eine mittlere Kettenlänge von 2,2 bis 1000 Phosphateinheiten aufweist (Komponente A),
20 bis 39,9 % Gew.-% Melamincyanurat, Melaminborat oder kondensiertes Melamin (Komponente B),
0,1 bis 2 Gew.-% Polytetrafluorethylen (Komponente C) und
20 bis 40 Gew.-% Ammoniumpolyphosphat (Komponente D) enthält.

4. Formmasse nach einem oder mehreren der Ansprüche 1 bis 3, **dadurch gekennzeichnet, dass** es sich bei dem Olefinpolymeren um Polyethylen, Polypropylen oder beliebige Mischungen bzw. Polymerisate davon handelt.

5. Formmasse nach einem oder mehreren der Ansprüche 1 bis 4, **dadurch gekennzeichnet, dass** das Piperazinpolyphosphat folgende Kettenlängenverteilung aufweist:
| | |
|---|---|
| Kettenlänge 1 | 0 bis 10 % |
| Kettenlänge 2 | 0 bis 30 % |
| Kettenlänge 3 | 0 bis 30 % |
| Kettenlänge 4 | 0 bis 90 % |
| Kettenlänge 5 | 0 bis 25 % |
| Kettenlänge 6 | 0 bis 25 % |
| Kettenlänge 7 | 0 bis 40 % |
| Kettenlänge 8 und darüber | 0 bis 40 %. |

6. Formmasse nach einem oder mehreren der Ansprüche 1 bis 5, **dadurch gekennzeichnet, dass** es sich bei dem Antidrippingmittel um fluorierte Polymere, insbesondere Polytetrafluorethylen (PTFE) und/oder Alkali- oder Erdalkalimetallsalze der Perfluoralkansulfonsäure handelt.

7. Formmasse nach einem oder mehreren der Ansprüche 1 bis 6, **dadurch gekennzeichnet, dass** das Ammoniumpolyphosphat (Komponente D) mit 0,5 bis 25 % seines Gewichtes mit einem Coatingmittel umhüllt ist.

8. Formmasse nach einem oder mehreren der Ansprüche 1 bis 7, **dadurch gekennzeichnet, dass** es sich bei dem Coatingmittel um ein gehärtetes Melamin/Formaldehyd-Harz oder ein gehärtetes Epoxidharz handelt.

9. Formmasse nach einem oder mehreren der Ansprüche 1 bis 8 **dadurch gekennzeichnet, dass** das Piperazinpolyphosphat, eine mittlere Teilchengröße (d50) von < 100 µm aufweist

10. Formmasse nach einem oder mehreren der Ansprüche 1 bis 9, **dadurch gekennzeichnet, dass** das Piperazinpolyphosphat, eine mittlere Teilchengröße (d50) von < 30 µm aufweist.
